# EUROPEAN PATENT SPECIFICATION

(11) **EP 3 202 478 B1**
(45) Date of publication and mention of the grant of the patent: **01.05.2019**
(21) Application number: 15846217.6
(22) Date of filing: 29.09.2015
(51) Int. Cl.: B01D 39/20, B01D 46/00, B28B 3/20, C04B 38/06, F01N 3/022, C04B 35/565, C04B 38/00

(54) **METHOD FOR PRODUCING HONEYCOMB FILTER**
VERFAHREN ZUR HERSTELLUNG EINES WABENFILTERS
PROCÉDÉ DE PRODUCTION DE FILTRE EN NID D'ABEILLES

(30) Priority: 29.09.2014 JP 2014198667
(43) Date of publication of application: 09.08.2017
(73) Proprietor: Ibiden Co., Ltd., Ogaki-shi, Gifu 503-8604 (JP)
(72) Inventor: HASEGAWA ,Jun, Ibi-gun, Gifu 501-0695 (JP); YOSHIKAWA, Kyohei, Ibi-gun, Gifu 501-0695 (JP)
(74) Representative: Hoefer & Partner Patentanwälte mbB
(86) International application number: PCT/JP2015/077427
(87) International publication number: WO 2016/052459

(56) References cited:
- EP-A1- 1 900 709
- WO-A1-03/024892
- JP-A- 2001 199 777
- JP-A- 2003 262 118
- JP-A- 2003 275 521
- JP-A- 2003 292 388
- JP-A- 2009 112 880
- JP-A- 2009 256 175

## Description

### TECHNICAL FIELD

The present invention relates to a method for producing a honeycomb filter.

### BACKGROUND ART

Particulates (hereinafter also referred to as PM) such as soot and other toxic components contained in exhaust gas emitted from internal combustion engines of vehicles such as buses and trucks, construction machinery, and the like cause damage to the environment and human bodies, which has been a problem.

Thus, as a honeycomb filter to purify exhaust gas by capturing PM, there has been proposed a honeycomb filter which is formed of a ceramic block including multiple honeycomb fired bodies that are combined with each other in which the honeycomb fired bodies each include a large number of cells longitudinally arranged in parallel to one another across porous cell partition walls.

Patent Literature 1 discloses a method for producing such a honeycomb filter. In this method, raw materials such as silicon carbide powder and an organic binder are mixed to obtain a raw material composition as a molded body raw material, and the molded body raw material is extruded into a honeycomb molded body. Subsequently, the honeycomb molded body is degreased and fired into a honeycomb fired body, and multiple honeycomb fired bodies are bonded together into a ceramic block. The ceramic block is cut, and a peripheral coat layer is formed thereon. Thus, a honeycomb filter is produced.

When producing a honeycomb filter having cell partition walls made of porous silicon carbide, it is usually necessary to add a pore-forming agent, and thus the raw material composition contains a pore-forming agent and the like, in addition to the organic binder. Examples of the pore-forming agent include organic pore-forming agents such as spherical acrylic particles and graphite and balloons containing oxide ceramic such as silica.

### CITATION LIST

### Patent Literature

Patent Literature 1: JP-A 2007-230855

Further honeycomb filters are disclosed in patent documents EP 1900709 A1, WO 03/024892 A1, JP 2001 199777 A and JP 2009 256175 A.

### SUMMARY OF INVENTION

### - Technical Problem

When the honeycomb molded body is degreased and fired, the organic materials such as an organic binder and an organic pore-forming agent, the pore-forming agent containing oxide ceramic, and the like in the honeycomb molded body are separated from the honeycomb molded body and discharged from the furnace, but some of these materials remain in the furnace. The organic materials, carbon, silica, and the like remaining in the furnace stay in the atmospheric gas in the degreasing step and the firing step. Thus, it is difficult to maintain the constant degreasing and firing conditions. Moreover, the silica and the like are deposited as scale in the furnace, interfering with the transfer of products or the like. Thus, it is desirable to minimize the accumulation of various materials on the inner wall surface of the furnace.

The present invention, which is defined in the appended claims, is made to solve the above problems and aims to provide a method for producing a honeycomb filter in which scattering of organic decomposed materials, carbon, silica, and the like can be suppressed in the degreasing step and the firing step to prevent the attachment of the organic decomposed materials, carbon, silica, and the like to the furnace walls, and the honeycomb filter can be efficiently produced under stable conditions.

### - Solution to Problem

To achieve the object described above, the method for producing a honeycomb filter of the present invention includes a molded body raw material preparing step of mixing silicon carbide powder, organic additives at least including an organic binder, and a pore-forming agent containing silica to prepare a raw material composition as a molded body raw material; a molded body producing step of extruding the prepared molded body raw material into a honeycomb molded body; a degreasing step of degreasing the produced honeycomb molded body; and a firing step of firing the degreased honeycomb molded body, wherein at the end of the degreasing step, the degreased honeycomb molded body contains the pore-forming agent containing silica and carbon, wherein the degreasing step is performed in a completely inert gas atmosphere, wherein in the degreasing step, oxidation reaction of the carbon or the organic additives in the honeycomb molded body is suppressed to allow a carbon component to remain in the degreased honeycomb molded body, and wherein in the firing step, the silica is allowed to react with the carbon to synthesize silicon carbide, wherein the firing step is performed at 1400°C to 2200°C in a completely inert gas atmosphere.

The method for producing a honeycomb filter of the present invention is designed in such a manner that the degreased honeycomb molded body contains the pore-forming agent containing silica (also described herewith as pore-forming agent containing silica and carbon at the end of the degreasing step. Thus, in the firing step, the silica reacts with the carbon to synthesize silicon carbide. In a porous honeycomb filter to be produced, the silicon carbide fired body includes cell partition walls. The synthesized silicon carbide becomes a part of the cell partition walls and improves the mechanical characteristics of the cell partition walls.

The carbon and the silica are consumed in the above reaction. Thus, the scattering of the organic decomposed materials, carbon, silica, and the like can be suppressed in the degreasing step and the firing step, and the attachment of the organic decomposed materials, carbon, silica, and the like to the furnace walls can be suppressed. Thus, the honeycomb filter can be efficiently produced under stable conditions.

In the method for producing a honeycomb filter of the present invention, preferably, in the molded body raw material preparing step, carbon powder is added to the raw material composition.

The addition of the carbon powder allows the carbon to react with the silica to synthesize silicon carbide in the firing step, thus suppressing the attachment of the organic decomposed materials, carbon, silica, and the like to the furnace walls.

In the method for producing a honeycomb filter of the present invention, preferably, in the degreasing step, oxidation reaction of carbon or the organic additives in the honeycomb molded body is suppressed to allow a carbon component to remain in the degreased honeycomb molded body.

In the method for producing a honeycomb filter of the present invention, in the degreasing step, the oxygen concentration in the gas surrounding the honeycomb molded body is reduced or the honeycomb molded body is degreased in an oxygen-free atmosphere, thus allowing the carbon component to remain in the degreased honeycomb molded body. As a result, the carbon is allowed to react with the silica to synthesize silicon carbide in the firing step, thus suppressing the attachment of the organic decomposed materials, carbon, silica, and the like to the furnace walls.

In the method for producing a honeycomb filter of the present invention, preferably, the degreasing step is performed in a completely inert gas atmosphere.

The degreasing step is performed in a completely inert gas atmosphere, so that the organic additives such as the organic binder are less likely to be oxidatively decomposed and are mainly pyrolyzed, thus easily being converted into carbon. As a result, the carbon is allowed to react with the silica to synthesize silicon carbide in the firing step, thus suppressing the attachment of the organic decomposed materials, carbon, silica, and the like to the furnace walls.

In the method for producing a honeycomb filter of the present invention, preferably, the firing step is performed in a completely inert gas atmosphere.

As described above, in the method for producing a honeycomb filter of the present invention, the degreasing step and the firing step are performed in an inert gas atmosphere. In this case, the degreasing step and the firing step can be performed in one furnace, simplifying the steps and enabling a significant reduction in the required amount of heat. Thus, the honeycomb filter can be produced at lower cost. In addition, in the firing step, the carbon is allowed to react with the silica to synthesize silicon carbide.

In the method for producing a honeycomb filter of the present invention, preferably, the molar ratio of carbon to silica (carbon/silica) in the degreased honeycomb molded body is 1 to 3.

When the molar ratio of carbon to silica (carbon/silica) in the degreased honeycomb molded body is 1 to 3, the carbon reacts with the silica to form silicon carbide in the firing step, and thus there is hardly any residual silica or residual carbon in the resulting fired body. Therefore, it is possible to produce a porous silicon carbide fired body having good characteristics, and the resulting honeycomb filter can exhibit sufficient performance as a honeycomb filter.

In the method for producing a honeycomb filter of the present invention, preferably, the degreasing step and the firing step are performed in one batch furnace.

As described above, in the method for producing a honeycomb filter of the present invention, the degreasing step and the firing step can be performed in an inert gas atmosphere, so that the degreasing step and the firing step can be continuously performed in one batch furnace, and the honeycomb filter can be produced more efficiently at lower cost.

In the method for producing a honeycomb filter of the present invention, preferably, the degreasing step and the firing step are performed in one continuous furnace, and the continuous furnace is provided with a degreasing area and a firing area.

As described above, in the method for producing a honeycomb filter of the present invention, the degreasing step and the firing step are performed in an inert gas atmosphere, so that the degreasing step and the firing step can be performed in one continuous furnace provided with the degreasing area and the firing area, and the degreasing step and the firing step can be performed while honeycomb molded bodies are continuously supplied to and delivered from the continuous furnace. Thus, the honeycomb filter can be produced more efficiently at lower cost.

In the method for producing a honeycomb filter of the present invention, preferably, the organic additives further include an organic pore-forming agent.

In the case where the organic additives further include an organic pore-forming agent in the method for producing a honeycomb filter of the present invention, the organic pore-forming agent can be carbonized in the degreased step, and the resulting carbon is allowed to react with the silica, thus preventing the carbon and the silica from remaining in the honeycomb fired body that constitutes the honeycomb filter.

### BRIEF DESCRIPTION OF DRAWINGS

Fig. 1(a) is a schematic perspective view of a honeycomb molded body in which one end of each cell is plugged; and Fig. 1(b) is a cross-sectional view of the honeycomb molded body of Fig. 1(a) taken along line A-A.
Fig. 2 is a schematic vertical sectional view of a continuous heating furnace according to the present invention, which is cut in a vertical plane along the longitudinal direction thereof.
Fig. 3 is a schematic cross-sectional view of the continuous heating furnace according to the present invention, which is cut in a plane perpendicular to the longitudinal direction thereof.
Fig. 4 is a perspective view of a honeycomb filter produced by the method for producing a honeycomb filter of the present invention.
Fig. 5(a) is a perspective view of the honeycomb fired body that constitutes the honeycomb filter of Fig. 4; and Fig. 5(b) is a cross-sectional view of the honeycomb fired body of Fig. 5(a) taken along line B-B.

### DESCRIPTION OF EMBODIMENTS

The method for producing a honeycomb filter of the present invention is described below.

The method for producing a honeycomb filter of the present invention includes a molded body raw material preparing step of mixing silicon carbide powder, organic additives at least including an organic binder, and pore-forming agent containing silica to prepare a raw material composition as a molded body raw material; a molded body producing step of extruding the prepared molded body raw material into a honeycomb molded body; a degreasing step of degreasing the produced honeycomb molded body; and a firing step of firing the degreased honeycomb molded body, wherein at the end of the degreasing step, the degreased honeycomb molded body contains the pore-forming agent containing silica and carbon, and in the firing step, the silica is allowed to react with the carbon to synthesize silicon carbide.

The method for producing a honeycomb filter of the present invention includes a molded body raw material preparing step, a molded body producing step, a degreasing step, and a firing step. The method for producing a honeycomb filter including the above steps is described below for each step.

### (1) Molded body raw material preparing step

In the molded body raw material preparing step, silicon carbide powder, organic additives at least including an organic binder, and pore-forming agent containing silica are mixed to prepare a raw material composition as a molded body raw material.

Properties such as particle size of the silicon carbide powder are not particularly limited. Yet, it is preferred to use two types of silicon carbide powder having different average particle sizes. For example, two types of silicon carbide powder having different average particle sizes may be a combination of silicon carbide powder having an average particle size of 0.3 to 50 µm and silicon carbide having an average particle size of about 0.1 to 1.0 µm. Such a combination facilitates the production of a porous silicon carbide fired body.

Examples of the organic additives include a liquid dispersion medium, a plasticizer, and a lubricant, in addition to the organic binder.

Examples of the organic binder include methylcellulose, carboxymethyl cellulose, hydroxyethyl cellulose, polyethylene glycol, phenolic resin, and epoxy resin. Preferred among these is methylcellulose.

Examples of the liquid dispersion medium include alcohols such as methanol and organic solvents such as benzene. Water may be used as a liquid dispersion medium other than the organic additives.

Any plasticizer may be used. Examples thereof include glycerin.

The lubricant is not particularly limited. Examples thereof include polyoxyalkylene-based compounds such as polyoxyethylene alkyl ether and polyoxypropylene alkyl ether. Specific examples of the lubricant include polyoxyethylene monobutyl ether and polyoxypropylene monobutyl ether.

The raw material composition contains a pore-forming agent containing silica. Examples of the pore-forming agent containing silica include balloons that are fine hollow spheres. Specific examples of balloons include silica balloon, glass microballoon, shirasu balloon, fly ash balloon (FA balloon), and mullite balloon. The use of such a pore-forming agent facilitates the control of the porosity of the honeycomb filter to be produced. The pore-forming agent containing silica is added to the raw material composition to control the porosity of the honeycomb filter and to cause reaction between the silica and the residual carbon in the degreased honeycomb molded body so as to remove the carbon and synthesize silicon carbide.

In the case where the amount of residual carbon in the honeycomb molded body is insufficient relative to the pore-forming agent containing silica in the raw material composition, carbon powder such as graphite powder may be added to the raw material composition. The average particle size of the carbon powder to be added is preferably 0.5 to 40 µm.

The addition of the carbon powder causes reaction between the carbon and the silica to synthesize silicon carbide in the firing step, thus suppressing the attachment of the organic decomposed materials, carbon, silica, and the like to the furnace walls.

The molded body raw material is prepared by mixing the silicon carbide powder, the organic binder, the pore-forming agent containing silica, and water as the liquid dispersion medium in a wet mixer. Materials such as the carbon powder, the plasticizer, and the lubricant may be added at this point, if necessary.

### (2) Molded body producing step

In the subsequent molded body producing step, the prepared molded body raw material is extruded into a honeycomb molded body.

In this step, the obtained molded body raw material is fed into an extruder and extruded into a rectangular pillar-shaped continuous body which is then cut in a predetermined length, thus producing a honeycomb molded body having a large number of through-holes arranged longitudinally in parallel to one another. The honeycomb molded body is dried by a dryer into a dried honeycomb molded body.

Next, a predetermined amount of plug material paste is placed at one end of each of the through-holes constituting the dried honeycomb molded body to plug the cells. When plugging the cells, for example, a cell plugging mask is placed on an end face of the honeycomb molded body (i.e., each cut face obtained by cutting both ends), and the plug material paste is placed only in the cells that need to be plugged. The plug material paste is then dried. Through these steps, the honeycomb molded body in which one end of each cell is plugged is produced.

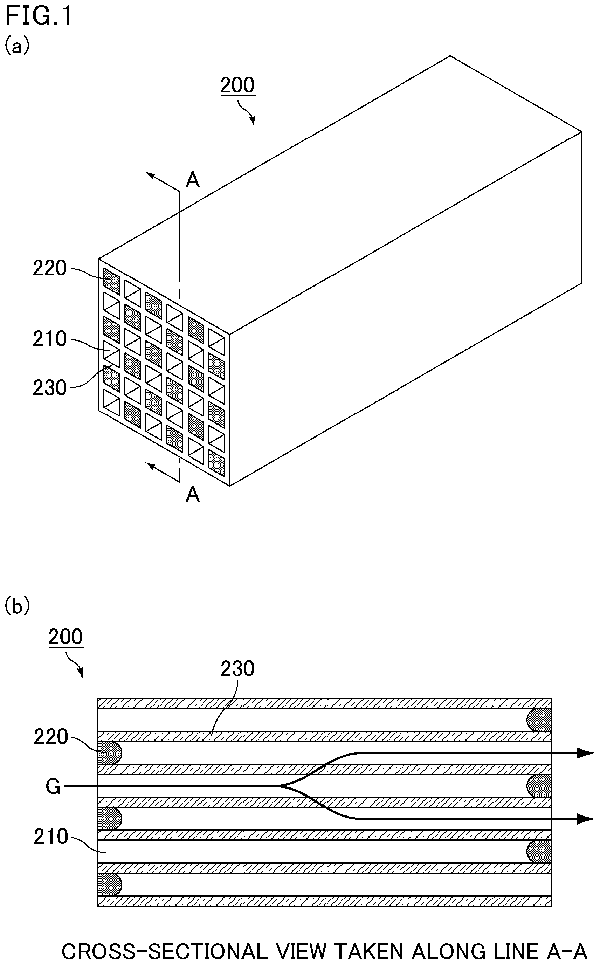

Fig. 1(a) is a schematic perspective view of a honeycomb molded body in which one end of each cell is plugged; and Fig. 1(b) is a cross-sectional view of the honeycomb molded body of Fig. 1(a) taken along line A-A.

As shown in Figs. 1(a) and 1(b), a produced honeycomb molded body 200 includes a large number of cells 210 arranged longitudinally in parallel to one another in which one end of each cell 210 is plugged with a plug 220 and a wall 230 is formed between the cells 210.

### (3) Degreasing step

Next, the honeycomb molded body 200 in which each cell is plugged is heated in a degreasing furnace for degreasing.

Conventionally, the degreasing step has been performed by heating at 300°C to 650°C in an oxygen-containing atmosphere to oxidatively decompose and completely remove the organic materials. However, in the method for producing a honeycomb filter of the present invention, oxidation reaction of carbon or the organic additives in the honeycomb molded body is suppressed in the degreasing step to allow the carbon component to remain in the degreased honeycomb molded body. The degreasing step is performed in a completely inert gas atmosphere to allow the carbon component to remain in the degreased honeycomb molded body. Furthermore, in one method, the amount of oxygen in the degreasing atmosphere may be reduced. Yet, preferably, the degreasing step is performed by heating the honeycomb molded body at 200°C to 650°C in a completely inert gas atmosphere.

The term "completely inert gas atmosphere" refers to an inert gas atmosphere completely free of oxygen, hydrogen, or the like. Examples thereof include an argon atmosphere and a nitrogen atmosphere. The organic additives are pyrolyzed in a completely inert gas atmosphere as described above.

Thus, when the organic additives contain hydrogen or oxygen in the compounds, the organic additives are pyrolyzed into hydrocarbons or oxides which are separated from the honeycomb molded body 200; however, some of the organic additives remain as carbon and carbon compounds in the honeycomb molded body 200. In the case where the honeycomb molded body prior to degreasing contains carbon powder, the carbon powder will remain as is in the honeycomb molded body.

### (4) Firing step

After the degreasing step, the degreased honeycomb molded body 200 is fired in the firing step. The firing step is performed at 1400°C to 2200°C in a completely inert gas atmosphere. When the firing step is performed in a completely inert gas atmosphere as described above, since the degreased honeycomb molded body contains the pore-forming agent containing silica and carbon, the silica reacts with the carbon to synthesize silicon carbide in the firing step. In a porous honeycomb filter to be produced, the silicon carbide fired body includes cell partition walls. The synthesized silicon carbide becomes a part of the cell partition walls and improves the mechanical characteristics of the cell partition walls.

The carbon and the silica are consumed in the above reaction. Thus, the scattering of the organic decomposed materials, carbon, silica, and the like can be suppressed in the degreasing step and the firing step, and the attachment of the organic decomposed materials, carbon, silica, and the like to the furnace walls can be suppressed. Thus, the honeycomb filter can be efficiently produced under stable conditions.

The degreasing step is performed in a completely inert gas atmosphere. Since the degreasing step and the firing step are performed in a completely inert gas atmosphere, the degreasing step and the firing step can be performed in the same atmospheric gas. This means that the degreasing step and the firing step can be performed in one batch furnace and that the degreasing step and the firing step can be performed in one continuous furnace provided with a degreasing area and a firing area.

The case where the degreasing step and the firing step are performed in one continuous furnace provided with a degreasing area and a firing area is described.

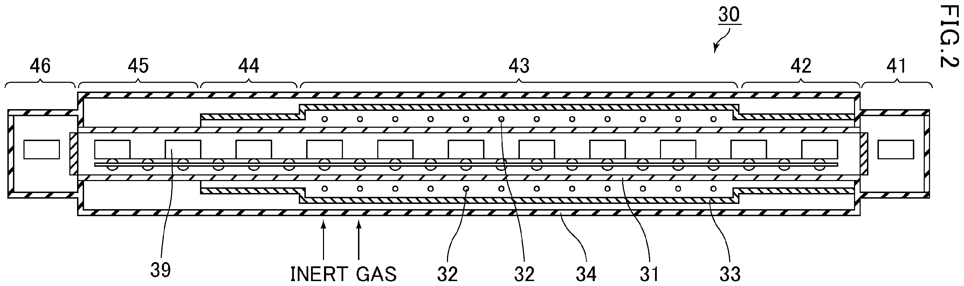

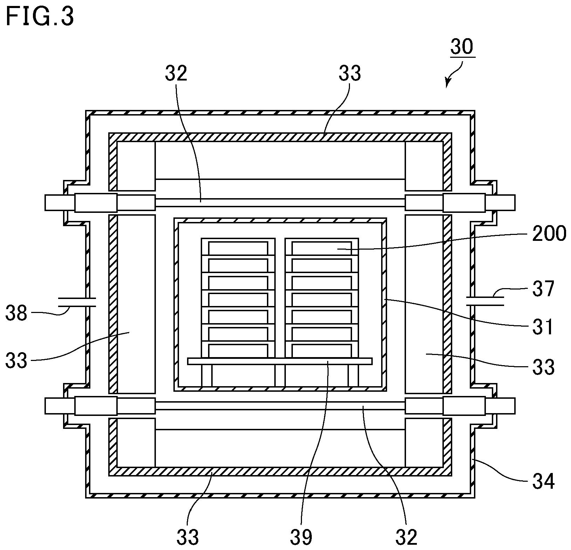

Fig. 2 is a schematic vertical sectional view of a continuous heating furnace according to the present invention, which is cut in a vertical plane along the longitudinal direction thereof. Fig. 3 is a schematic cross-sectional view of the continuous heating furnace according to the present invention, which is cut in a plane perpendicular to the longitudinal direction thereof.

As shown in Fig. 2, in a continuous heating furnace 30 according to the present invention, a deaeration area 41, a degreasing area 42, a firing area 43, a slow cooling area 44, a cooling area 45, and a deaeration area 46 are provided in this order from the inlet.

The deaeration area 41 is provided to change the atmosphere inside and around the honeycomb molded body 200 to be carried in. After the honeycomb molded body 200 is carried on a conveyance unit 39 or the like into the deaeration area 41, the deaeration area 41 is temporarily vacuumed, and inert gas is subsequently introduced, whereby the atmosphere inside and around the honeycomb molded body 200 is changed to an inert gas atmosphere.

In the degreasing area 42, the temperature of the honeycomb molded body 200 is increased to 200°C to 650°C by using heaters or with the heat of the firing area for pyrolysis of the organic additives in the honeycomb molded body 200. The heating step in the degreasing area 42 corresponds to the degreasing step.

Next, in the firing area 43, the temperature is further increased to 650°C or higher for firing the honeycomb molded body at 1400°C to 2200°C. The fired honeycomb molded body 200 is gradually cooled in the slow cooling area 44, and is further cooled to near room temperature in the cooling area 45. Then, after the honeycomb molded body 200 is carried into the deaeration area 46, the inert gas is replaced by air, and the honeycomb molded body 200 is carried out from the deaeration area 46. Thereby, a sequence of the degreasing treatment and the firing treatment of the honeycomb molded body 200 is completed.

Next, an example of the structure of the continuous heating furnace is described.

As shown in Fig. 2 and Fig. 3, in the continuous heating furnace 30, the degreasing area 42 and the firing area 43 where the honeycomb molded body 200 is degreased and fired, respectively, include a cylindrical muffle 31 formed to provide a space for accommodating the honeycomb molded body 200, heaters 32 provided at predetermined intervals above and below the muffle 31, an insulating material 33 provided so as to surround the muffle 31 and the heaters 32; and a refractory material 34 provided outside the insulating material 33. The atmosphere in the continuous heating furnace 30 is separated from the surrounding atmosphere by the refractory material 34.

As shown in Fig. 2, the heaters 32 are provided in the firing area 43 and, if necessary, in the degreasing area 42.

The muffle 31 is supported by a supporting member (not shown) at its entire bottom and is configured in such a manner that it can transfer the honeycomb molded body 200. The muffle 31 is provided in the entire region excluding the deaeration areas 41 and 46. A conveying means such as a conveyor belt may be provided inside the muffle 31. With the conveying means, the honeycomb molded body 200 can be automatically conveyed.

The insulating material 33 is provided in the degreasing area 42, the firing area 43, and the slow cooling area 44. In the firing area 43, the insulating material 33 is provided further outside the heaters 32 and is suitably fixed by fixtures. On the outermost side, the refractory material 34 is provided in the entire region excluding the deaeration area 41. The refractory material 34 is provided with a gas inlet tube 37 for filling the inside of the heating furnace with an inert gas and a gas exhaust tube 38 for discharging the inert gas.

The degreasing step and the firing step can also be performed in one batch furnace.

When the heating furnace is a batch furnace, the structure thereof is not much different from the structure of the continuous furnace. For example, a batch furnace can be constructed as follows: the heating furnace is formed in a box shape with the refractory material 34; only a portion used as the firing area 43 of the continuous heating furnace is placed inside; an openable door or the like is attached as a port for inlet and outlet; and the inside of the refractory material 34 is surrounded by an insulating material or the like.

After the honeycomb molded body 200 is carried into the batch furnace, an inert gas is introduced into the furnace and the temperature is gradually increased for degreasing, followed by a further increase in the temperature for firing, for example.

The case where the degreasing step and the firing step are performed in one batch furnace or one continuous furnace has been described, but the structure of the batch furnace or the continuous furnace is not limited to the one described above, and the batch furnace having a different structure or the continuous furnace having a different structure may be used.

The ratio (%) of the weight of the residual carbon in the honeycomb molded body 200 before reaction with the silica or the like in the degreasing step and the subsequent firing step to the total weight of the organic materials is herein referred to as the residual carbon ratio. The residual carbon ratio varies depending on the type of organic materials. Thus, the amount of residual carbon in the honeycomb molded body 200 can be adjusted by selecting the type and amount of the organic additives. The amount of residual carbon in the honeycomb molded body 200 can also be adjusted by adding carbon powder.

In the method for producing a honeycomb filter of the present invention, preferably, the molar ratio of carbon to silica (carbon/silica) in the degreased honeycomb molded body is 1 to 3.

As shown in the following reaction formula (1), 1 mole of silica reacts with 3 moles of carbon to synthesize 1 mole of SiC and generate 2 moles of CO gas at the same time.

SiO₂ + 3C = SiC + 2CO (1)

Thus, in order to prevent the carbon and the silica from remaining in the produced honeycomb filter, preferably, the silica is present in an amount of 60 g relative to 36 g of the carbon, provided that they react with each other in an ideal manner as shown in the reaction formula (1). Preferably, the molar ratio of carbon to silica (carbon/silica) is 1 to 3, considering the fact that actually the reaction of the silica with the carbon first produces SiO having a relatively low melting point and the SiO reacts with the carbon to produce SiC.

The raw material composition may contain carbon powder or an organic pore-forming agent as an organic additive as described above. The addition of an organic pore-forming agent facilitates the control of the porosity of the honeycomb filter to be produced. In the degreasing step, a portion of the organic pore-forming agent is also converted into carbon, and the carbon reacts with the silica, thus producing SiC. In addition, a portion of the carbon is converted into CO by the reaction with the silica and the CO is separated from the honeycomb molded body, resulting in the formation of pores. Examples of the organic pore-forming agent include spherical acrylic particles and graphite.

A porous honeycomb fired body can be produced through the degreasing step and the firing step. The structure of the honeycomb fired body is basically the same as that of the honeycomb molded body 200 shown in Fig. 1.

When producing a honeycomb filter using the honeycomb fired bodies obtained above, a sealing material paste is applied to lateral sides of each honeycomb fired body to form a sealing material paste layer, and these honeycomb fired bodies are sequentially stacked on one another with the sealing material paste layer therebetween. This procedure is repeated to produce an aggregate of a predetermined number of the honeycomb fired bodies that are combined together. The sealing material paste may be a mixture of an inorganic binder, an organic binder, and inorganic fibers and/or inorganic particles, for example.

Next, the aggregate of the honeycomb fired bodies is heated to solidify the sealing material paste layer by drying into a sealing material layer (adhesive layer). Subsequently, the aggregate of the honeycomb fired bodies is cut with a diamond cutter or the like into a ceramic block. The sealing material paste is applied to the outer periphery of the ceramic block and solidified by drying into a coat layer, whereby a honeycomb filter can be produced.

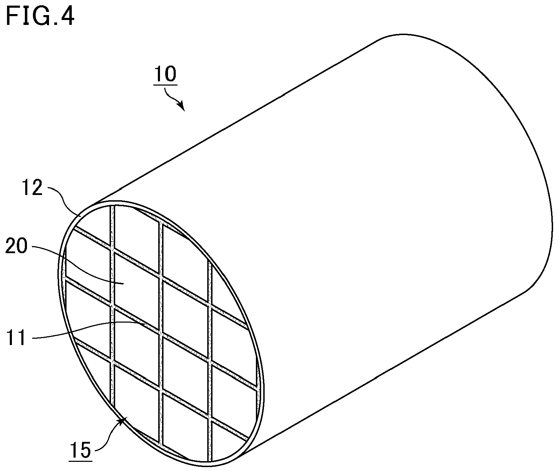

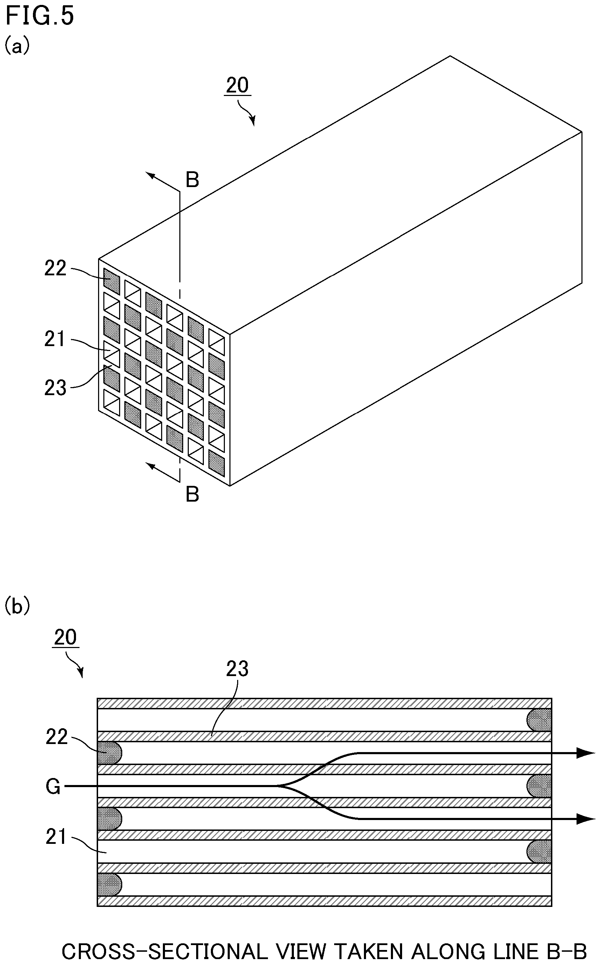

Fig. 4 is a perspective view of a honeycomb filter produced by the method for producing a honeycomb filter of the present invention. Fig. 5(a) is a perspective view of the honeycomb fired body that constitutes the honeycomb filter of Fig. 4; and Fig. 5(b) is a cross-sectional view of the honeycomb fired body of Fig. 5(a) taken along line B-B.

As shown in Fig. 4, a honeycomb filter 10 of the present invention includes a round pillar-shaped ceramic block 15 in which multiple porous honeycomb fired bodies 20 made of silicon carbide are combined with one another with an adhesive layer 11 therebetween. The ceramic block 15 includes a coat layer 12 formed therearound.

In the honeycomb filter 10 shown in Fig. 4, the ceramic block has a round pillar shape. Yet, in the present invention, the shape of the ceramic block is not limited to the round pillar shape as long as it is a pillar shape. It may be any other shape such as a cylindroid shape or a rectangular pillar shape.

The honeycomb fired body 20 is produced by degreasing and firing the honeycomb molded body 200 shown in Fig. 1(a) and 1(b). A large number of cells 21 are longitudinally arranged in parallel to one another, and one of the ends of each cell 21 is plugged. Thus, each cell partition wall 23 separating the cells 21 from each other functions as a filter. Specifically, as shown in Fig. 5(b), each cell 21 formed in the honeycomb fired body 20 is plugged with a plug 22 at one end on the exhaust gas inlet side or the exhaust gas outlet side. Exhaust gas that has flowed into one of the cells 21 inevitably passes through the cell partition wall 23 separating the cells 21 from each other, and then flows out from another cell 21.

The honeycomb filter having the structure described above captures PM such as soot contained in exhaust gas emitted from an internal combustion engine and can thus purify the exhaust gas.

The residual carbon from the degreasing treatment in a completely inert gas atmosphere reacts with the silica and is thus converted into silicon carbide in the firing step. The synthesized silicon carbide tends to aggregate in a neck portion where silicon carbide particles are bonded to each other, and plays the role of improving the mechanical characteristics of the produced honeycomb fired body.

The carbon and the silica are consumed in the above reaction. Thus, the scattering of the organic decomposed materials, carbon, silica, and the like can be suppressed in the degreasing step and the firing step to suppress the attachment of the organic decomposed materials, carbon, silica, and the like to the furnace walls, and the honeycomb filter can be efficiently produced under stable conditions.

In addition, the degreasing step and the firing step can be performed in one furnace, enabling a significant reduction in the required amount of heat. Thus, the honeycomb filter can be produced at lower cost. Moreover, there is no need to take out the degreased body from the degreasing furnace for cooling and then to carry it to the firing furnace. Thus, the process can be simplified, the risk of breaking the honeycomb molded body during transportation is eliminated, and the honeycomb filter can be produced efficiently.

### EXAMPLES

Examples that more specifically disclose embodiments of the present invention are described below. The present invention, however, is not limited to these examples.

### (Example 1)

### (1) Production of honeycomb fired body

First, in the molded body raw material preparing step, a mixture was obtained by mixing 40.8% by weight of silicon carbide coarse powder having an average particle size of 22 µm and 11.6% by weight of silicon carbide fine powder having an average particle size of 0.5 µm. To the mixture were added 4.7% by weight of an organic binder (methylcellulose), 2.8% by weight of a lubricant (UNILUB available from NOF Corporation), 1.3% by weight of glycerin, 17.5% by weight of a pore-forming agent (silica balloons), 7.0% by weight of graphite powder having an average particle size of 1 µm, and 14.4% by weight of water. The resulting mixture was kneaded into a molded body raw material.

In the subsequent molded body producing step, the molded body raw material obtained above was extruded into a raw honeycomb molded body. Next, the raw honeycomb molded body was dried using a microwave dryer into a dried honeycomb molded body.

Subsequently, a plug material paste was placed in predetermined cells of the dried honeycomb molded body to plug the cells, thus obtaining a honeycomb molded body with plugged cells shown in Fig. 1(a) and 1(b). The molded body raw material was used as the plug material paste. After plugging the cells, the dried honeycomb molded body including the plug material paste was dried again by the dryer.

Subsequently, multiple dried honeycomb molded bodies were placed on a conveyance unit and carried into a batch furnace, and nitrogen was introduced into the furnace. Once the temperature was raised to 400°C in a nitrogen atmosphere under normal pressure, the heating was stopped for degreasing. Then, argon was introduced into the same batch furnace to replace the nitrogen gas by the argon gas without moving the degreased honeycomb molded body, and the degreased honeycomb molded body was fired at 2200°C in an argon atmosphere under normal pressure for three hours, whereby a honeycomb fired body was produced.

In this case, 0.1% of the honeycomb fired bodies were broken at the stage where they were taken out from the firing furnace.

The obtained honeycomb fired body was formed of a porous silicon carbide sintered body. The porosity was 42%, the average pore diameter was 9 µm, the size was 34.3 mm × 34.3 mm × 150 mm, the number of cells (cell density) was 31 pcs/cm² (200 pcs/inch²), the cell partition wall thickness was 0.1016 mm, and the outer wall thickness was 0.3 mm.

### (2) Production of honeycomb filter

The honeycomb fired bodies obtained through the above steps were used to produce a honeycomb structured body.

An adhesive material paste was applied to predetermined lateral sides of each honeycomb fired body, and 36 (6 vertically × 6 transversely) honeycomb fired bodies were bonded together with the adhesive material paste therebetween, whereby an aggregate of the honeycomb fired bodies was produced.

Further, the aggregate of the honeycomb fired bodies was heated at 180°C for 20 minutes to solidify the adhesive material paste by drying, whereby a rectangular pillar-shaped ceramic block having a 1-mm-thick adhesive layer was produced.

Subsequently, the periphery of the rectangular pillar-shaped ceramic block was cut with a diamond cutter to produce a round pillar-shaped ceramic block having a diameter of 198 mm.

Next, a peripheral coat material paste was applied to the periphery of the round pillar-shaped ceramic block, and the peripheral coat material paste was solidified by heating at 120°C to form a 1.0-mm-peripheral coat layer on the periphery of the ceramic block. The adhesive material paste was used as the peripheral coat material paste.

Through the above steps, a honeycomb filter having a diameter of 200 mm × a length of 150 mm was produced.

### (Example 2)

A honeycomb fired body was produced in the same manner as in Example 1, except that in the molded body raw material preparing step, a mixture was obtained by mixing 41.4% by weight of silicon carbide coarse powder having an average particle size of 22 µm and 17.7% by weight of silicon carbide fine powder having an average particle size of 0.5 µm; to the mixture were added 5.1% by weight of an organic binder (methylcellulose), 2.1% by weight of a lubricant (UNILUB available from NOF Corporation), 1.4% by weight of glycerin, 5.8% by weight of silica powder, 10.7% by weight of starch, and 15.8% by weight of water; and the resulting mixture was kneaded into a molded body raw material.

In this case, 0.1% of the honeycomb fired bodies were broken at the stage where they were taken out from the firing furnace.

### (Comparative Example 1)

### (1) Production of honeycomb fired body

First, a mixture was obtained by mixing 54.5% by weight of silicon carbide coarse powder having an average particle size of 22 µm and 23.4% by weight of silicon carbide fine powder having an average particle size of 0.5 µm. To the mixture were added 4.3% by weight of an organic binder (methylcellulose), 2.6% by weight of a lubricant (UNILUB available from NOF Corporation), 1.2% by weight of glycerin, and 14.0% by weight of water. The resulting mixture was kneaded into a molded body raw material.

Then, the obtained molded body raw material was extruded into a raw honeycomb molded body. Next, the raw honeycomb molded body was dried by a microwave dryer into a dried honeycomb molded body. Subsequently, a plug material paste was placed in predetermined cells of the dried honeycomb molded body to plug the cells, thus obtaining a honeycomb molded body with plugged cells shown in Fig. 1(a) and 1(b). The molded body raw material was used as a plug material paste. After plugging the cells, the dried honeycomb molded body including the plug material paste was dried again by the dryer.

Next, the honeycomb molded body was carried on a conveyance unit into the degreasing furnace for degreasing at 500°C in air (degreasing treatment). The degreased honeycomb molded body was cooled in the degreasing furnace, carried out from the degreasing furnace, and carried into the firing furnace. Then, the degreased honeycomb molded body was fired at 2200°C in an argon atmosphere under normal pressure for three hours, whereby a honeycomb fired body was produced.

During the period from when each degreased honeycomb molded body was carried out from the degreasing furnace until it was carried into the firing furnace, 0.3% of the degreased honeycomb molded bodies were broken at the stage where they were carried out from the degreasing furnace, additional 0.5% of the degreased honeycomb molded bodies were broken during the period from when they were carried out from the degreasing furnace until it was carried into the firing furnace, and further additional 0.1% of the honeycomb fired bodies were broken at the stage where they were taken out from the firing furnace. The total breakage percentage of the honeycomb fired bodies was 0.9%.

The obtained honeycomb fired body was formed of a porous silicon carbide sintered body. The porosity was 42%, the average pore diameter was 9 µm, the size was 34.3 mm × 34.3 mm × 150 mm, the number of cells (cell density) was 31 pcs/cm² (200 pcs/inch²), the cell partition wall thickness was 0.1015 mm, and the outer wall thickness was 0.3 mm.

### (2) Production of honeycomb filter

A honeycomb filter was produced in the same manner as in Example 1, using the honeycomb fired bodies obtained through the above steps.

### (Evaluation)

In the case of the degreasing furnace used in Comparative Example 1, the inner wall surface of the furnace was darkly stained with the organic decomposed materials and the like. In contrast, in the case of the batch furnace used in Example 1 and Example 2, the inner wall surface of the furnace was only slightly stained. Thus, the frequency of maintenance of the batch furnace used in Example 1 and Example 2 was lower (about 40%) than that of the furnace used in Comparative Example 1.

### REFERENCE SIGNS LIST

10 honeycomb filter
11 adhesive layer
12 coat layer
15 ceramic block
20 honeycomb fired body
21 cell
22 plug
23 cell partition wall
30 continuous heating furnace
31 muffle
32 heater
33 insulating material
34 refractory material
37 gas inlet tube
38 gas exhaust tube
39 conveyance unit
41, 46 deaeration area
42 degreasing area
43 firing area
44 slow cooling area
45 cooling area
200 honeycomb molded body
210 cell
220 plug
230 wall

## Claims

1. A method for producing a honeycomb filter, the method comprising:
a molded body raw material preparing step of mixing silicon carbide powder, organic additives at least including an organic binder, and a pore-forming agent containing silica to prepare a raw material composition as a molded body raw material;
a molded body producing step of extruding the prepared molded body raw material into a honeycomb molded body;
a degreasing step of degreasing the produced honeycomb molded body; and
a firing step of firing the degreased honeycomb molded body,
wherein at the end of the degreasing step, the degreased honeycomb molded body contains the pore-forming agent containing silica and carbon,
wherein the degreasing step is performed in a completely inert gas atmosphere,
wherein in the degreasing step, oxidation reaction of the carbon or the organic additives in the honeycomb molded body is suppressed to allow a carbon component to remain in the degreased honeycomb molded body, and
wherein in the firing step, the silica is allowed to react with the carbon to synthesize silicon carbide, wherein the firing step is performed at 1400°C to 2200°C in a completely inert gas atmosphere.

2. The method for producing a honeycomb filter according to claim 1,
wherein in the molded body raw material preparing step, carbon powder is added to the raw material composition.

3. The method for producing a honeycomb filter according to claim 1 or 2,
wherein the molar ratio of carbon to silica (carbon/silica) in the degreased honeycomb molded body is 1 to 3.

4. The method for producing a honeycomb filter according to any one of claims 1 to 3,
wherein the degreasing step and the firing step are performed in one batch furnace.

5. The method for producing a honeycomb filter according to any one of claims 1 to 4,
wherein the degreasing step and the firing step are performed in one continuous furnace, and the continuous furnace is provided with a degreasing area and a firing area.

6. The method for producing a honeycomb filter according to any one of claims 1 to 5,
wherein the organic additives further include an organic pore-forming agent.

## Patentansprüche

1. Verfahren zur Herstellung eines Wabenfilters, wobei das Verfahren umfasst:
einen Formkörperrohmaterial-Anfertigungsschritt des Mischens von Siliziumkarbidpulver, organischen Additiven, die zumindest ein organisches Bindemittel enthalten, und einem Porenbildner mit Siliziumdioxid zum Herstellen einer Rohmaterialzusammensetzung als Formkörperrohmaterial;
einen Formkörper-Herstellungsschritt des Extrudierens des angefertigten Formkörperrohmaterials in einen Wabenformkörper;
einen Entfettungsschritt zum Entfetten des hergestellten Wabenformkörpers; und
einen Brennschritt des Brennens des entfetteten Wabenformkörpers;
wobei am Ende des Entfettungsschritts der entfettete Wabenformkörper den Porenbildner mit Siliziumdioxid und Kohlenstoff enthält,
wobei der Entfettungsschritt in einer vollständig inerten Gasatmosphäre durchgeführt wird,
wobei im Entfettungsschritt die Oxidationsreaktion des Kohlenstoffs oder der organischen Additive im Wabenformkörper unterdrückt wird, um zu ermöglichen, dass eine Kohlenstoffkomponente im entfetteten Wabenformkörper verbleibt, und
wobei in dem Brennschritt das Siliziumdioxid mit dem Kohlenstoff zum Synthetisieren des Siliziumkarbids reagieren kann, wobei der Brennschritt bei 1400 °C bis 2200 °C in einer vollständig inerten Gasatmosphäre durchgeführt wird.

2. Verfahren zur Herstellung eines Wabenfilters nach Anspruch 1.
wobei im Formkörperrohmaterial-Herstellungsschritt der Rohmaterialzusammensetzung Kohlenstoffpulver zugesetzt wird.

3. Verfahren zur Herstellung eines Wabenfilters nach Anspruch 1 oder 2.
wobei das Molverhältnis von Kohlenstoff zu Siliziumdioxid (Kohlenstoff/Siliziumdioxid) im entfetteten Wabenformkörper 1 bis 3 beträgt.

4. Verfahren zur Herstellung eines Wabenfilters nach einem der Ansprüche 1 bis 3.
wobei der Entfettungsschritt und der Brennschritt in einem Kammerofen durchgeführt werden.

5. Verfahren zur Herstellung eines Wabenfilters nach einem der Ansprüche 1 bis 4.
wobei der Entfettungsschritt und der Brennschritt in einem Durchlaufofen durchgeführt werden, und der Durchlaufofen mit einem Entfettungsbereich und einem Brennbereich versehen ist.

6. Verfahren zur Herstellung eines Wabenfilters nach einem der Ansprüche 1 bis 5.
wobei die organischen Additive zudem einen organischen Porenbildner enthalten.

## Revendications

1. Procédé de production d'un filtre en nid d'abeille, le procédé comprenant :
une étape de préparation de matière première de corps moulé consistant à mélanger une poudre de carbure de silicium, des additifs organiques comportant au moins un liant organique et un agent porogène contenant de la silice pour préparer une composition de matière première en tant que matière première de corps moulé ;
une étape de production de corps moulé consistant à extruder la matière première de corps moulé préparée pour obtenir un corps moulé en nid d'abeille ;
une étape de dégraissage consistant à dégraisser le corps moulé en nid d'abeille produit ; et
une étape de cuisson consistant à cuire le corps moulé en nid d'abeille dégraissé,
dans lequel, à la fin de l'étape de dégraissage, le corps moulé en nid d'abeille dégraissé contient l'agent porogène contenant de la silice et du carbone,
dans lequel l'étape de dégraissage est réalisée dans une atmosphère de gaz inerte totalement,
dans lequel, dans l'étape de dégraissage, une réaction d'oxydation du carbone ou des additifs organiques dans le corps moulé en nid d'abeille est supprimée pour permettre à un composant carboné de rester dans le corps moulé en nid d'abeille dégraissé, et
dans lequel, dans l'étape de cuisson, la silice est amenée à réagir avec le carbone pour synthétiser du carbure de silicium, où l'étape de cuisson est réalisée à une température comprise entre 1400°C et 2200°C dans une atmosphère de gaz inerte totalement.

2. Procédé de production d'un filtre en nid d'abeille selon la revendication 1,
dans lequel, dans l'étape de préparation de matière première de corps moulé, une poudre de carbone est ajoutée à la composition de matière première.

3. Procédé de production d'un filtre en nid d'abeille selon la revendication 1 ou 2,
dans lequel le rapport molaire du carbone sur la silice (carbone/silice) dans le corps moulé en nid d'abeille dégraissé est compris entre 1 et 3.

4. Procédé de production d'un filtre en nid d'abeille selon l'une quelconque des revendications 1 à 3,
dans lequel l'étape de dégraissage et l'étape de cuisson sont réalisées dans un four discontinu.

5. Procédé de production d'un filtre en nid d'abeille selon l'une quelconque des revendications 1 à 4,
dans lequel l'étape de dégraissage et l'étape de cuisson sont réalisées dans un four continu, et le four continu est muni d'une zone de dégraissage et d'une zone de cuisson.

6. Procédé de production d'un filtre en nid d'abeille selon l'une quelconque des revendications 1 à 5,
dans lequel les additifs organiques comportent en outre un agent organique porogène.
